# FASCICULE DE BREVET EUROPEEN

(11) **EP 3 333 454 B1**
(45) Date de publication et mention de la délivrance du brevet: **13.05.2020**
(21) Numéro de dépôt: 17203993.5
(22) Date de dépôt: 28.11.2017
(51) Int. Cl.: F16H 1/06, F16H 55/08, F16H 55/10

(54) **PROCEDE DE GENERATION D'UN PROFIL DE DENT D'UNE ROUE ENGRENANT AVEC UN PIGNON A ROULEAUX**
VERFAHREN ZUR ERZEUGUNG EINES ZAHNPROFILS EINES RADS, DAS SICH MIT EINEM ROLLENRITZEL VERZAHNT
METHOD FOR GENERATING A TOOTH PROFILE OF A WHEEL ENGAGING WITH A ROLLER PINION

(30) Priorité: 28.11.2016 FR 1661596
(43) Date de publication de la demande: 13.06.2018
(73) Titulaire: Safran Landing Systems, 78140 Vélizy-Villacoublay (FR)
(72) Inventeur: WICKER, Paul, 78140 VELIZY-VILLACOUBLAY (FR)
(74) Mandataire: Lavialle, Bruno François Stéphane

(56) Documents cités:
- EP-A1- 0 851 150
- US-A- 4 879 920
- US-A- 5 247 847

## Description

L'invention concerne un procédé de génération d'un profil de dent d'une roue engrenant avec un pignon à rouleaux.

### ARRIERE PLAN DE L'INVENTION

On connaît des roues dentées engrenant avec un pignon à rouleaux. De tels engrenages sont envisagés dans des applications d'entraînement de roues d'aéronef par un moteur électrique qui entraîne le pignon à rouleaux engrenant avec la roue dentée solidaire de la roue de l'aéronef. Cependant, compte tenu de la déformation de l'atterrisseur portant la roue d'aéronef, et de la roue d'aéronef elle-même, l'entraxe varie dans des proportions non négligeables, dont il convient de tenir compte pour éviter toute usure prématurée, voire tout blocage. En particulier, les déformations peuvent amener l'entraxe à diminuer, et il convient de faire en sorte que les rouleaux ne coincent ni ne viennent en contact avec le fond du creux interdentaire. Un tel exemple a été montré dans le document US 5247847 A.

### OBJET DE L'INVENTION

L'invention vise à proposer un procédé de génération d'un profil de dent d'une roue engrenant avec un pignon à rouleaux permettant un fonctionnement du couple roue/pignon malgré des variations d'entraxe appréciables.

### PRESENTATION DE L'INVENTION

En vue de la réalisation de ce but, on propose un procédé de génération d'un profil de creux interdentaire s'étendant entre deux dents d'une roue engrenant avec un pignon à rouleaux dans un plan de référence perpendiculaire à un axe central dont l'intersection avec le plan de référence définit un centre, comportant les étapes de :
- Définir dans le plan de référence un axe radial de référence d'un espace interdentaire passant par le centre;
- Définir un premier profil de flanc de dent comportant une portion active en trochoïde destinée à venir en contact avec un rouleau et s'étendant jusqu'à un cercle délimitant une tête des dents, et une portion de fond s'étendant jusqu'à intersecter l'axe radial de référence en un point de fond selon une tangente perpendiculaire à l'axe radial;
- Définir un deuxième profil de flanc symétrique du premier profil par rapport à l'axe radial de sorte que les premier et deuxième profils définissent un profil de creux interdentaire nominal adapté à permettre la réception d'un rouleau venant en contact sans jeu avec les portions actives en regard des premier et deuxième profils au niveau d'un diamètre primitif de la roue.
Selon l'invention, le procédé comporte les étapes suivantes, effectuées avant l'étape de définition du deuxième profil :
- Déformer la portion de fond du premier profil de sorte à rapprocher le point de fond du centre d'une quantité égale un jeu radial donné JR;
- Déplacer angulairement le premier profil d'un demi-jeu angulaire donné Jα autour du centre pour l'éloigner de l'axe radial.
Ces deux transformations du creux interdentaire nominal permettent d'accommoder une variation d'entraxe entre la roue et le pignon à rouleaux tendant à rapprocher le pignon de la roue. En particulier, le jeu radial JR permet l'enfoncement d'un rouleau dans le creux interdentaire dans lequel il est engagé du fait de la diminution d'entraxe, tandis que le jeu angulaire Jα permet d'éviter le coincement du rouleau dans le creux interdentaire. Il conviendra alors de légèrement déformer la partie de la portion de fond proche de l'axe radial de référence pour la connecter avec celui-ci selon une tangente perpendiculaire.

### BREVE DESCRIPTION DES FIGURES

L'invention sera mieux comprise à la lumière de la description qui suit d'un mode particulier de mise en œuvre du procédé de l'invention, en référence aux figures des dessins annexés, parmi lesquelles :
- La figure 1 est une vue en perspective d'une roue dentée engrenant avec un pignon à rouleaux, les dents de la roue dentée étant définies selon l'invention;
- Les figures 2A et 2B sont des coupes selon un plan perpendiculaire aux axes de rotation de la roue dentée et du pignon à rouleaux de la figure 1, respectivement lors d'un fonctionnement à entraxe nominal, et lors d'un fonctionnement à entraxe diminué;
- La figure 3 est un schéma illustrant la génération du premier profil et du deuxième profil de dent selon la procédé de l'invention;
- La figure 4 est un schéma illustrant l'installation du jeu radial selon l'invention;
- La figure 5 est un schéma illustrant l'installation du jeu angulaire selon l'invention.

### DESCRIPTION DETAILLEE DE L'INVENTION

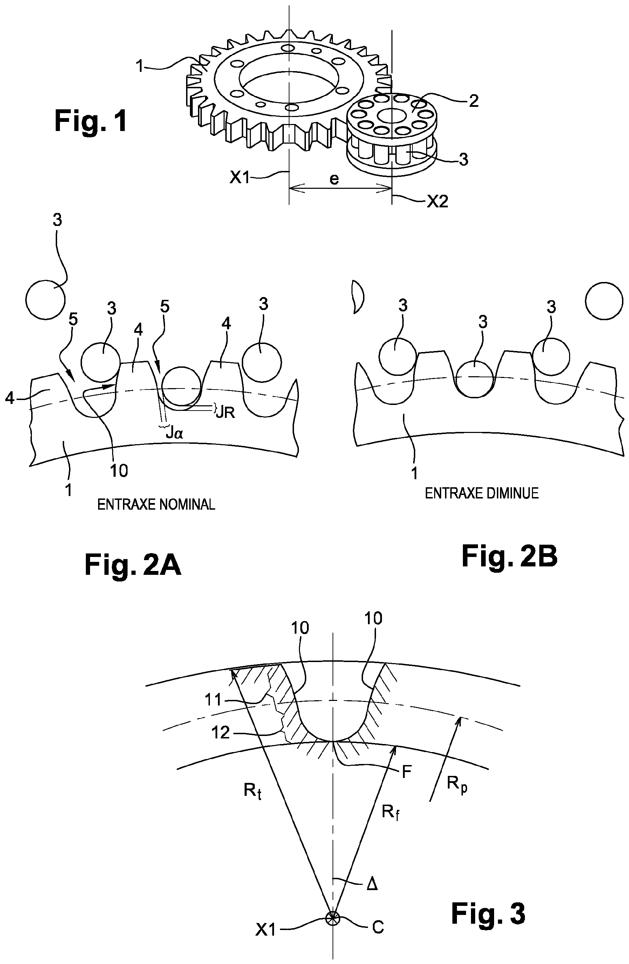

L'invention est appliquée à une roue dentée 1 engrenant avec un pignon 2 portant des rouleaux 3 tels qu'illustrés à la figure 1. La roue dentée 1 est montée pour tourner autour d'un axe X1, tandis que le pignon 2 est monté pour tourner autour d'un axe X2 parallèle à l'axe X1 de la roue dentée, et éloigné de celui-ci d'un entraxe nominal e. La figure 2A montre le fonctionnement du couple formée par la roue dentée 1 et le pignon à rouleaux 2 avec un entraxe nominal. La roue dentée 1 comporte des dents 4 définissant des espaces interdentaires 5 dans lesquelles les rouleaux 3 pénètrent pour venir en contact de la portion active de l'un des flancs 10 des dents 4. On constate que pour le rouleau 3 contactant le flanc 10 au niveau d'un rayon primitif Rp des dents de la roue dentée 1, il existe un jeu radial JR entre le rouleau et le fond du creux interdentaire, ainsi qu'un jeu angulaire Ja entre le rouleau et le flanc en regard. L'intérêt de cette disposition est visible à la figure 2B dans lequel on a représenté le fonctionnement du couple formé par la roue dentée 1 et le pignon à rouleaux 2 avec un entraxe diminué par rapport à l'entraxe nominal d'une valeur égale au jeu radial JR. Le rouleau 3 vient alors se loger en fond du creux interdentaire sans interférence, et il ne se coince pas grâce au jeu angulaire Ja qui a été installé.

Les figures 3, 4, 5 expliquent la définition des profils des flancs 10 permettant l'installation du jeu radial JR et du jeu angulaire Ja.

A la figure 3 est illustrée la définition de profils de dents nominaux, définissant un creux interdentaire nominal avant installation des jeux. On voit sur la figure le centre C intersection de l'axe central X1 avec un plan de référence perpendiculaire à l'axe X1. On définit un axe radial de référence Δ. Les profils de flancs 10 s'étendent symétriquement de part et d'autre de l'axe radial de référence Δ entre un cercle extérieur de rayon Rt délimitant la tête des dents, et un cercle intérieur de rayon Rf délimitant le fond des dents. On commence par délimiter un premier profil, ici sur la figure le profil de gauche, le deuxième profil étant obtenu par symétrie par rapport à l'axe radial de référence pour définir un profil nominal d'espace interdentaire. Les profils de dents comportent de façon classique une première portion active 11 en trochoïde et une deuxième portion de fond 12 intersectant l'axe radial de référence Δ au niveau d'un point de fond F selon une tangente perpendiculaire à l'axe radial de référence Δ. Le deuxième profil de flanc 10 (à droite sur la figure) est obtenu par symétrie par rapport à l'axe radial de référence Δ, de sorte qu'au niveau du rayon primitif Rp, un rouleau peut se loger dans le creux interdentaire ainsi défini en venant en contact sans jeu contre les deux profils.

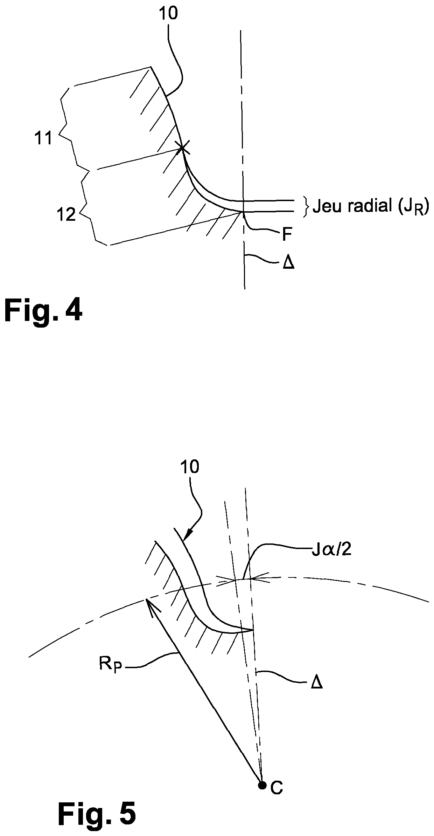

La figure 4 montre l'installation du jeu radial JR par modification du premier profil. La portion de fond 12 est creusée pour rapprocher le point de fond F du centre C le long de l'axe radial de référence Δ d'une quantité égale au jeu radial JR à installer, tout en préservant la direction de tangence qui est perpendiculaire à l'axe de radial de référence Δ.

La figure 5 montre l'installation du jeu angulaire Ja, après la déformation du profil opérée comme ci-avant. Elle consiste à décaler angulairement le profil préalablement déformé en le faisant tourner d'un angle égal à Jα/2 pour l'éloigner de l'axe radial de référence Δ. Le fond du profil est alors légèrement déformé pour ramener le point de fond F sur l'axe radial de référence Δ tout en préservant la direction de la tangence.

Le profil de creux interdentaire 5 est alors obtenu en complétant le premier profil ainsi déformé par le deuxième profil de dent obtenu par symétrie par rapport à l'axe radial de référence Δ du premier profil ainsi déformé selon l'invention. Ce creux interdentaire permet au couple formé par la roue dentée 1 et le pignon à rouleaux 2 de fonctionner avec un entraxe diminué.

L'invention n'est pas limitée à ce qui vient d'être décrit mais englobe au contraire tout variante entrant dans le cadre défini par la revendication.

## Revendications

1. Procédé de génération d'un profil de creux interdentaire (5) entre deux dents (4) d'une roue (1) engrenant avec un pignon (2) à rouleaux (3) dans un plan de référence perpendiculaire à un axe central (X1) dont l'intersection avec le plan de référence définit un centre (C), comportant les étapes de :
- Définir dans le plan de référence un axe radial de référence (Δ) d'un espace interdentaire passant par le centre (C) ;
- Définir un premier profil de flanc de dent comportant une portion active (11) en trochoïde destinée à venir en contact avec un rouleau (3) et s'étendant jusqu'à un cercle délimitant une tête des dents, et une portion de fond (12) s'étendant jusqu'à intersecter l'axe radial de référence (Δ) en un point de fond (F) selon une tangente perpendiculaire à l'axe radial de référence (Δ);
- Définir un deuxième profil de flanc symétrique du premier profil par rapport à l'axe radial de référence (Δ) pour délimiter un creux interdentaire (5) nominal, adapté à permettre la réception d'un rouleau (3) venant en contact sans jeu avec les portions actives (11) en regard des premier et deuxième profils au niveau d'un diamètre primitif;
**caractérisé en ce que** le procédé comporte les étapes suivants, effectuées avant l'étape de définition du deuxième profil :
- Déformer la portion de fond (12) du premier profil de sorte à rapprocher le point de fond (F) du centre (C) d'une quantité égal un jeu radial donné (JR);
- Déplacer angulairement le premier profil d'un demi-jeu angulaire donné (Jα) autour du centre (C) pour l'éloigner de l'axe radial de référence (Δ).

## Patentansprüche

1. Verfahren zum Erzeugen eines Zwischenzahnhohlraumprofils (5) zwischen zwei Zähnen (4) eines Rades (1), das mit einem Ritzel (2) mit Rollen (3) in einer Bezugsebene in Eingriff steht, die senkrecht zu einer Mittelachse (X1) ist, deren Schnittpunkt mit der Bezugsebene einen Mittelpunkt (C) definiert, umfassend die Schritte:
- Definieren einer radialen Bezugsachse (Δ) eines Zwischenzahnraums, die durch den Mittelpunkt (C) geht, in der Bezugsebene;
- Definieren eines ersten Zahnflankenprofils, das einen trochoidförmigen aktiven Abschnitt (11) umfasst, der dazu bestimmt ist, mit einer Rolle (3) in Kontakt zu kommen, und sich bis zu einem Kreis erstreckt, der einen Kopf der Zähne begrenzt, sowie einen Bodenabschnitt (12), der sich soweit erstreckt, bis er die radiale Bezugsachse (Δ) an einem Bodenpunkt (F) gemäß einer Tangente senkrecht zur radialen Bezugsachse (Δ) schneidet;
- Definieren eines zweiten Flankenprofils, das in Bezug auf die radiale Bezugsachse (Δ) symmetrisch zum ersten Profil ist, um einen nominalen Zwischenzahnhohlraum (5) zu begrenzen, der dazu geeignet ist, die Aufnahme einer Rolle (3) zu gestatten, die ohne Spiel mit den gegenüberliegenden aktiven Abschnitten (11) des ersten und des zweiten Profils im Bereich eines primitiven Durchmessers in Kontakt kommt;
**dadurch gekennzeichnet, dass** das Verfahren die folgenden Schritte umfasst, die vor dem Schritt des Definierens des zweiten Profils ausgeführt werden:
- Verformen des Bodenabschnittes (12) des ersten Profils, derart, dass der Bodenpunkt (F), um eine Größe, die gleich einem gegebenen radialen Spiel (JR) ist, an den Mittelpunkt angenähert wird;
- Winkelverschieben des ersten Profils um ein gegebenes Winkel-Halbspiel (Jα) um den Mittelpunkt (C), um es von der radialen Bezugsachse (Δ) zu entfernen.

## Claims

1. Method for generating a tooth space profile (5) between two teeth (4) of a wheel (1) engaging with a roller (3) pinion (2) in a reference plane perpendicular to a central axis (X1) whose intersection with the reference plane defines a centre (C), comprising the steps of:
- Defining, in the reference plane, a radial reference axis (Δ) of a tooth space passing through the centre (C);
- Defining a first tooth side profile comprising a trochoidal active portion (11) intended to come into contact with a roller (3) and extending to a circle delimiting a crest of the teeth, and a bottom portion (12) extending until it intersects the radial reference axis (Δ) at a bottom point (F) on a tangent perpendicular to the radial reference axis (Δ);
- Defining a second side profile, symmetrical to the first profile with respect to the radial axis, to delimit a nominal tooth space suitable (5) for receiving a roller (3) which comes into contact without clearance with the facing active portions (11) of the first and second profiles at the level of a primitive diameter;
**characterized in that** the method comprises the following steps, performed before the step of defining the second profile:
- Deforming the bottom portion (12) of the first profile so that the bottom point (F) is brought nearer to the centre (C) by an amount equal to a given radial clearance (JR);
- Moving the first profile angularly through a given angular half-clearance (Jα) around the centre (C) to shift it away from the radial reference axis (Δ).
